# EUROPÄISCHE PATENTSCHRIFT

(11) **EP 0 865 847 B1**
(45) Veröffentlichungstag und Bekanntmachung des Hinweises auf die Patenterteilung: **30.10.2002**
(21) Anmeldenummer: 97118281.1
(22) Anmeldetag: 21.10.1997
(51) Int. Cl.: B21K 5/04

(54) **Verfahren zur Herstellung eines Bohrers**
Method for the production of a drill
Procédé de production d'un foret

(30) Priorität: 26.11.1996 DE 19648971
(43) Veröffentlichungstag der Anmeldung: 23.09.1998
(73) Patentinhaber: DreBo Werkzeugfabrik GmbH, D-88361 Altshausen (DE)
(72) Erfinder: Dreps, Klaus, 88361 Altshausen (DE); Uebele, Klemens, 88636 Illmensee 2 (DE)
(74) Vertreter: Baronetzky, Klaus, Dipl.-Ing.

(56) Entgegenhaltungen:
- WO-A-94/04295
- DE-A- 3 636 798
- DE-C- 404 126
- FR-A- 2 388 887
- US-A- 3 608 400

## Beschreibung

Die Erfindung betrifft ein Verfahren zur Herstellung eines Bohrers gemäß dem Oberbegriff von Anspruch 1.

Die bislang bekannten Bohrer werden üblicherweise aus Vollstahl hergestellt, wobei die Bohrmehlabfuhrnuten eingefräst, geschliffen oder gerollt werden. Die Bohrmehlabfuhrnuten weisen meist eine halbkreisförmige, U-förmige oder asymmetrische Ausgestaltung auf, wobei meist 1 oder 2 Bohrmehlabfuhrnuten um den Umfang des Bohrers gleichmäßig verteilt sind.

Der Schaft des Bohrers weist häufig einen anderen Durchmesser als der Bohrer auf, um eine Anpassung an die je gewünschte Werkzeugaufnahme zu ermöglichen. Wenn der Bohrer aus Vollmaterial hergestellt ist, entsteht ein vergleichsweise großer Materialverbrauch, nachdem der Rundstahl den Durchmesser des je größten Bereiches des Bohrers aufweisen muß, auch wenn der Durchmesser des Schaftes vom Durchmesser der Förderwendel abweicht.

Es ist bereits vorgeschlagen worden, einen gegebenenfalls vorfabrizierten Standard-Schaft, der der erwünschten Werkzeugaufnahme entspricht, durch Anschweißen eines Rundstahls, dessen Durchmesser bereits dem Durchmesser des herzustellenden Bohrers entspricht, materialsparend herzustellen. Das Anschweißen erfordert jedoch viel Erfahrung und ein gesteuertes Abkühlen und führt in der Regel zu einer Mittigkeitsabbweichung.

Nachdem auch Ausrichtfehler im Submillimeterbereich nicht toleriert werden können, kommt dieses Verfahren meist nur bei Bohrern mit vergleichsweise großem Durchmesser in Betracht, bei denen jedoch ohnehin weniger Materialabfall bei der spanabhebenden Bearbeitung entsteht.

Daneben ist in der FR 2 388 887 ein gattungsgemäßes Verfahren angegeben, bei dem ein bereits mit Bohrmehlabfuhrnuten vorbearbeiteter Rohling, der in einer Anordnung rotierend eingespannt ist, entlang seiner Achse in Bereichen aufgeheizt und dabei verdreht wird.

Das Aufheizen des wie eine Welle eingespannten Rohlings, dessen Enden mit unterschiedlicher Geschwindigkeit angetrieben werden können, geschieht induktiv durch eine den Rohling umgebende Spule, die parallel zu dessen Achse an einem auf einem Träger entlangfahrenden Schlitten befestigt ist. Das nachfolgende Abkühlen geschieht mit einer ebenso am Schlitten befestigten Kühlwasserstrahlstufe.

Bei diesem Verfahren verschlechtert das lokale Erhitzen und Abkühlen des rotierenden Rohlings die Materialeigenschaften bzw. die Homogenität der äußeren Schichten des Kristallgefüges oder beeinträchtigt die Oberflächenqualität, insbesondere wenn der Rohling zuvor gehärtet wurde.

Demgegenüber liegt der Erfindung die Aufgabe zugrunde, ein Verfahren zur kostengünstigen und materialschonenden Herstellung eines Bohrers zu schaffen, das auch für kleine und mittlere Durchmesser geeignet ist und bei dem der Bohres eine mit aufwendiger hergestellten Bohrern vergleichbare Standzeit bietet.

Diese Aufgabe wird erfindungsgemäß durch die Merkmale des Anspruchs 1 gelöst. Vorteilhafte Weiterbildungen ergeben sich aus den Unteransprüchen.

Überraschend ergibt das erfindungsgemäße Verdrehen des Bohrers trotz der hierzu erforderlichen Verformung des Rohlings keine Ausrichtfehler bei den hier angestrebten mittleren Bohrerstärken bis etwa 15 mm. Um dieses Ziel zu erreichen, ist es günstig, wenn das Schaftende eingespannt gehalten wird und das Bohrerende verdreht wird, wenn gemäß der ersten Ausgestaltung des erfindungsgemäßen Bohrers der Bohrer durch Kaltverformung hergestellt wird. Bei Herstellung durch Warmverformung, also beispielweise mittels Strangpressen, ist es lediglich erforderlich, die ohnehin üblichen Führungen beizubehalten, um die Ausrichtgenauigkeit während des Abkühlens nicht zu beeinträchtigen. Überraschend ergibt sich sowohl eine hohe Standzeit als auch ein guter Bohrfortschritt trotz der spanlosen Bearbeitung des Bohrers. Dies gilt nicht nur für Bohrer, die im Über-Kopf-Betrieb eingesetzt werden und bei denen die Bohrmehlabfuhr ohnehin relativ unproblematisch ist, sondern auch für Bohrer, die im waagerechten Betrieb oder im Betrieb nach unten eingesetzt werden.

Erfindungsgemäß ist es besonders günstig, wenn der Bohrer, der beispielsweise als Vierkantrohling oder als Dreikantrohling vor der Fertigstellung vorliegt, in Abhängigkeit von dem gewünschten Enddurchmesser unter Zug oder ohne Zug verdreht wird.

Durch das Verdrehen erfolgt eine Verkürzung des Bohrers, die einhergeht mit einer gleichzeitigen Zunahme des Durchmessers des Bohrers. Durch das Verdrehen ergibt sich ferner eine Kissenverformung, so daß die Seitenflächen eines Vierkants konkav ausgewölbt werden. Diese Verformung tritt auch bei von einem Vierkant abweichenden Formen des Rohlings entsprechend auf.

Gewünschtenfalls kann der so entstandene Überstand gegenüber dem ursprünglichen Durchmesser des Rohlings abgeschliffen oder abgedreht werden, nachdem die spanlose Bearbeitung fertiggestellt ist, wobei es sich versteht, daß durch eine derartige Bearbeitung scharfkantig endende Flanken der Bohrmehlabfuhrnuten entstehen, die in an sich bekannter Weise als Schneidkanten verwendet werden können.

Gemäß einer alternativen Ausgestaltung ist ein warmverformter Bohrer vorgesehen. Während des Fließpressens wird hierzu der - bereits abgekühlte - Kopf des Bohrers gefaßt und während des Fließpressens kontiniuerlich gedreht. Hierdurch entsteht die Bohrmehlabfuhrnut bereits in der erwünschten spiraligen Form, wobei es sich versteht, daß es ohne weiteres möglich ist, die Steigung der Spirale an die Erfordernisse anzupassen und auch variabel zu gestalten.

Gemäß einer alternativen Ausgestaltung ist es vorgesehen, eine sich drehende Extrusionsdüse zu verwenden, die Vorsprünge aufweist, die den zu erstellenden Bohrmehlabfuhrnuten entsprechen. Sobald das Ende der Wendel des Bohrens erreicht ist, werden die Vorsprünge zurückgezogen, um die Ausgestaltung des Schaftes zu gestatten.

Es versteht sich, daß der Bohrer bei Bedarf in an sich bekannter Weise mit einem Hartmetallplättchen an der Hauptschneide bestückt werden kann, sowie gegebenfalls mit zusätzlichen Nebenschneidplatten, wenn dies erwünscht ist.

Die Querschnittsformen des Rohlings lassen sich in weiten Bereichen an die Erfordernisse anpassen. So ist es möglich, den Rohling als Zweikant, Dreikant oder Vierkant auszubilden um den Flächen je eine konkave Ausgestaltung zu geben. Auch ist es möglich, die Kanten spitz zulaufen zu lassen oder abzurunden oder gewünschtenfalls mit einer Fase zu versehen. In allen Fällen ergibt sich eine kostengünstige und umweltfreundliche Fertigung, zumal weder Schneidemulsion noch Späne anfallen.

Überraschend ist die Haltbarkeit des erfindungsgemäßen Bohrers besonders günstig, was darauf zurückgeführt wird, daß die Fasern des Stahlkernes nicht angeschnitten werden.

Weitere Vorteile, Einzelheiten und Merkmale ergeben sich aus der nachfolgenden Beschreibung eines Ausführungsbeispiels anhand der Zeichnung.

Es zeigen:
- Fig. 1: einen Schnitt durch eine erste Ausführungsform eines erfindungsgemäßen Bohrers, wobei sowohl die Querschnittsfläche des Bohrers vor dem verdrehen als auch diejenige nach dem Verdrehen dargestellt sind.
- Fig. 2: eine Seitenansicht eines erfindungsgemäßen Bohrers als Rohling, wobei das Verdrehen noch nicht vorgenommen worden ist.
- Fig. 3: eine Ansicht des Bohrers nach dem Verdrehen des die Wendel bildenden Abschnitts;
- Fig. 4: eine weitere Ausführungsform eines erfindungsgemäßen Bohrers in Schnittdarstellung.
- Fig. 5: eine Ausführungsform eines erläuterungshalber dargestellten Bohrers in Schnittdarstellung.
- Fig. 6: eine weitere Ausführungsform eines erläuterungshalber dargestellten Bohrers in Schnittdarstellung.

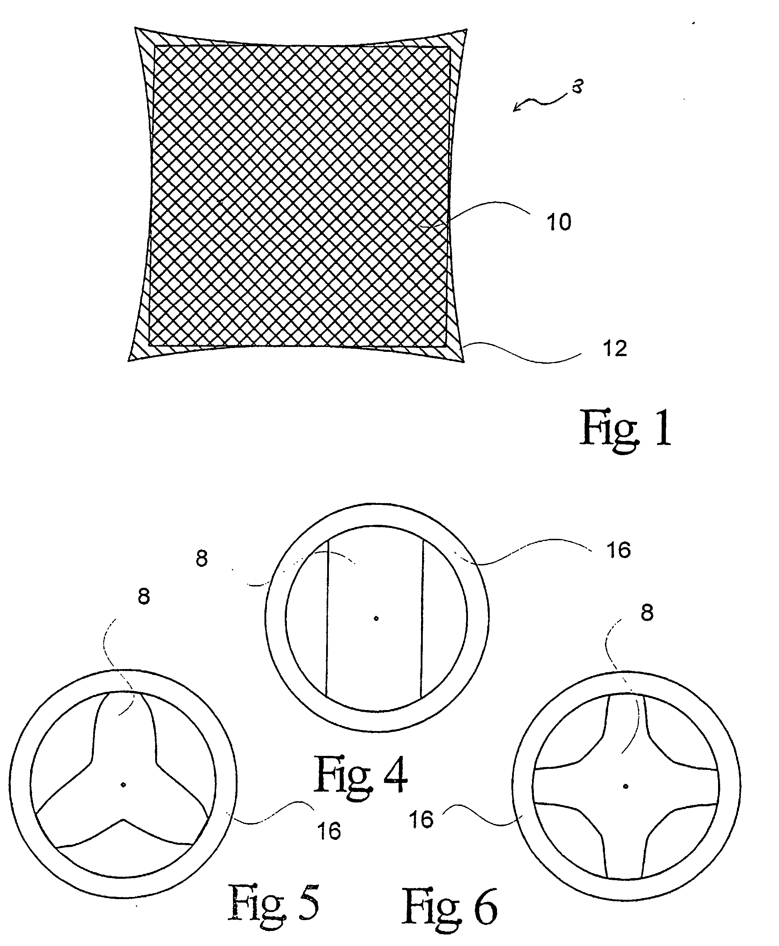

Ein in Fig. 1 dargestellter Bohrer 8 wurde aus einem Rohling 10 erzeugt, der in dem dargestellten Ausführungsbeispiel ein quadratischer Vierkant ist. Durch das Drehen des Rohlings wird eine Querschnittsform 12 des Bohrers 8 erzeugt, die eine etwas größere Fläche als die Fläche des Rohlings aufweist. Diese Fläche ist rauten- oder kissenförmig gegenüber dem Vierkant umgeformt, so daß aufgrund des Verdrehens eine in der Tendenz konkavere Ausgestaltung der Seitenflächen der Wendel entsteht.

Überraschend ergab sich bei Versuchen, daß auch ein einfacher Vierkant als Bohrer gemäß der erfindungsgemäßen Herstellung einen guten Bohrfortschritt ergab, so daß die Bohrmehlabfuhr auch bei dieser Ausgestaltung gewährleistet ist.

Praktisch wird auch bei glatten Seitenflächen demnach aufgrund des Verdrehens eine Art Nut erzeugt. Durch das Verdrehen erfolgt eine leichte Verkürzung und Verdickung der Wendel des Bohrers, die mit der in Fig. 1 dargestellten Flächenzunahme des Querschnitts einhergeht.

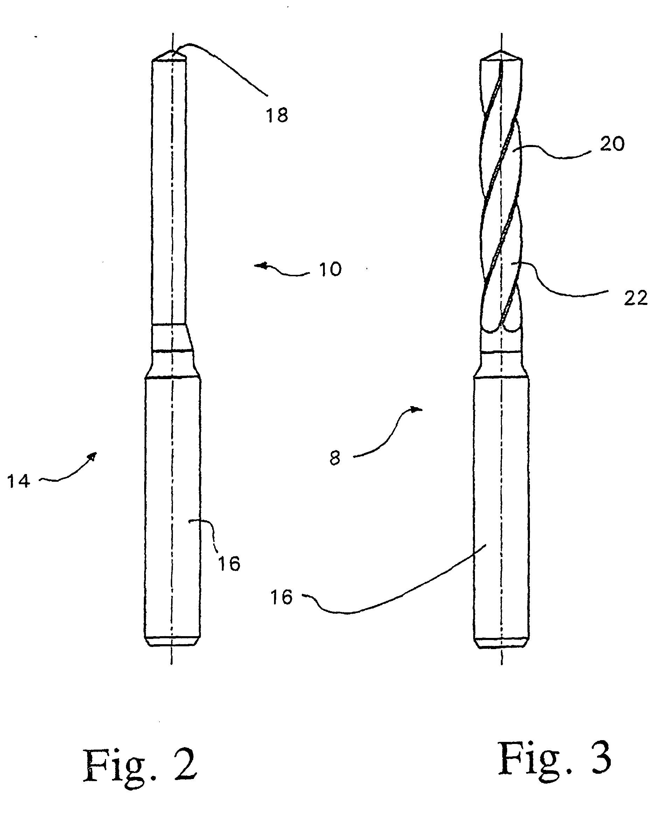

Der in Fig. 2 dargestellte Rohling 14 weist einen Schaft 16 mit einem gegenüber dem Rest des Bohrers vergrößerten Durchmesser auf. Das hier beschriebene Ausführungsbeispiel zeigt einen Bohrer mit einem Schaftdurchmesser von 13 mm und einem Bohrerdurchmesser von 10 mm. Es versteht sich, daß aber auch größere Durchmesser des Bohrers, beispielweise auch ein Nenndurchmesser von 15 mm, für die erfindungsgemäße Herstellung geeignet sind.

Der in Fig. 2 dargestellte Rohling weist einen Dreikant auf, dessen Seitenflächen konkav gewölbt sind, wie es aus Fig. 5 ersichtlich ist. Zur Herstellung der aus Fig. 3 ersichtlichen Bohrmehlabfuhrnuten und der Wendel wird der Rohling an dem Schaft 16 eingespannt und an dem Bohrerkopf 18 verdreht. Durch das Verdrehen ergibt sich die aus Fig. 3 ersichtliche Form der Wendel 20, die Bohrmehlabfuhrnuten 22 aufweist, die je hohlkehlig ausgebildet sind, und zwischen denen sich in an sich bekannter Weise die Stege zur Führung des Bohrers im Bohrloch erstrecken.

Fig. 4 zeigt eine andere Ausgestaltung des Rohlings, bei dem lediglich ein Zweikant durch Fließpressen hergestellt ist. Es versteht sich, daß anstelle des Fließpressens auch andere spanlose Verformungstechniken für die Herstellung des Rohlings in Betracht kommen, beispielsweise auch Gießen.

Fig. 5 zeigt erläuterungshalber eine Ausgestaltung eines Bohrers 8 mit drei Bohrmehlabfuhrnuten im Schnitt, wobei diese Ausgestaltung hinsichtlich der Führung im Bohrloch einerseits und der Bohrmehlabfuhr andererseits besonders günstig ist.

Eine weitere Ausgestaltung ist aus Fig. 6 ersichtlich, die auf einem Vierkant basiert, dessen Seiten konkav ausgestaltet sind.

## Patentansprüche

1. Verfahren zur Herstellung eines Bohrers mit mindestens einer Bohrmehlabfuhrnut, die sich über mindestens einen Teil der Länge des Bohrers erstreckt und spiralig gewunden ist, wobei die Bohrmehlabfuhrnut durch Verdrehen eines Rohlings, der ein Mehrkantprofil aufweist, erzeugt wird, **dadurch gekennzeichnet, dass** das Mehrkantprofil glatte Seitenflächen aufweist und sich die Bohrmehlabfuhrnut als eine konkave Auswölbung der Seitenflächen des Mehrkantprofils ergibt.

2. Verfahren nach Anspruch 1, **dadurch gekennzeichnet, daß** das Verdrehen des Rohlings (10) als Warmverformung durch Verdrehen einer Extrusionsdüse während der Extrusion des Mehrkantprofils oder durch Verdrehen des Kopfes des Rohlings während des Fließpressens des Mehrkantprofils erfolgt.

3. Verfahren nach Anspruch 1, **dadurch gekennzeichnet, daß** der Rohling (10) zur Erzeugung der Bohrmehlabfuhrnut (22) mittels Kaltverformung durch Eingespannthalten des Schaftendes (16) und Verdrehen des Bohrerkopfes (18) unter Zug bearbeitet wird.

4. Verfahren nach einem der vorhergehenden Ansprüche, **dadurch gekennzeichnet, daß** der Rohling (10) für die Erzeugung des Bohrers (8) als Dreikant-Profil oder Vierkant-Profil ausgebildet ist.

5. Verfahren nach einem der vorhergehenden Ansprüche, **dadurch gekennzeichnet, daß** der Bohrer auf sein Nennmaß fließgepreßt oder extrudiert wird und nach dem Verdrehen durch insbesondere spanabhebende Bearbeitung erneut auf das Nennmaß gebracht wird.

## Claims

1. A method of producing a drill bit with at least one swarf removal groove which extends over at least part of the length of the drill bit and is wound in spiral fashion, wherein the swarf removal groove is produced by twisting a blank which has a polygonal profile, **characterised in that** the polygonal profile has smooth lateral surfaces and the swarf removal groove is provided as a concave doming of the lateral surfaces of the polygonal profile.

2. A method according to Claim 1, **characterised in that** the twisting of the blank (10) is carried out as thermal deformation by twisting an extrusion die during the extrusion of the polygonal profile or by twisting the head of the blank during the extrusion of the polygonal profile.

3. A method according to Claim 1, **characterised in that** to produce the swarf removal groove (22) the blank (10) is processed by means of cold forming by clamping the shank end (16) and twisting the drill tip (18) under tension.

4. A method according to any one of the preceding Claims, **characterised in that** the blank (10) for producing the drill bit (8) is in the form a triangular profile or square profile.

5. A method according to any one of the preceding Claims, **characterised in that** the drill bit is extruded to its nominal size and after the twisting is again brought to the nominal size in particular by machining.

## Revendications

1. Procédé de fabrication d'un foret avec au moins une gorge d'évacuation de débris de forage, qui s'étend sur au moins une partie de la longueur du foret et est enroulée en spirale, la gorge d'évacuation de débris de forage étant générée par une rotation d'une ébauche présentant un profile polygonal, **caractérisé en ce que** le profil polygonal présente des faces latérales lisses et la gorge d'évacuation de débris de forage étant réalisée sous la forme d'un creusement concave des faces latérales du profil polygonal.

2. Procédé selon la revendication 1, **caractérisé en ce que** la rotation de l'ébauche (10) est effectuée sous la forme d'un processus de déformation à chaud, par une rotation d'une buse d'extrusion pendant l'extrusion du profil polygonal ou par rotation de la tête de l'ébauche pendant l'extrusion du profil polygonal.

3. Procédé selon la revendication 1, **caractérisé en ce que** l'ébauche (10) utilisée pour générer une gorge d'évacuation de débris de forage (22) est usinée par un déformage à froid, par maintien sous contrainte propre de l'extrémité de tige (16) et rotation de la tête de foret (18) maintenue sous traction.

4. Procédé selon l'une des revendications précédentes, **caractérisé en ce que** l'ébauche (10) servant à produire le foret (8) est réalisée sous la forme d'un profil triangulaire ou d'un profil quadrangulaire.

5. Procédé selon l'une des revendications précédentes, **caractérisé en ce que** le foret est soumis à un usinage par fluage ou un processus d'extrusion, pour atteindre sa cote nominale, et, après rotation, est de nouveau placé à la cote nominale, en particulier par un usinage procédant avec enlèvement de copeaux.
